# EUROPEAN PATENT APPLICATION

(11) **EP 4 578 295 A1**
(43) Date of publication of application: **02.07.2025**
(21) Application number: 23857306.7
(22) Date of filing: 18.08.2023
(51) Int. Cl.: A23L 2/00, A23L 2/52, A23L 33/10

(54) **CARBONATED JELLY BEVERAGE**

(30) Priority: 22.08.2022 JP 2022132054
(71) Applicant: Otsuka Pharmaceutical Factory, Inc., Naruto-shi, Tokushima 772-8601 (JP)
(72) Inventor: YAMAOKA Ippei, Naruto-shi, Tokushima 772-8601 (JP); ABE Kazumi, Naruto-shi, Tokushima 772-8601 (JP); UYAMA Chie, Naruto-shi, Tokushima 772-8601 (JP)
(74) Representative: Ipsilon
(86) International application number: PCT/JP2023/029906
(87) International publication number: WO 2024/043195

(57) **Abstract**

The invention relates to a carbonated jelly drink for reducing an amount of water intake, a carbonated jelly drink for reducing thirst, a powder formulation for producing the carbonated jelly drinks, a method for reducing an amount of water intake including ingesting the carbonated jelly drink, and a method for reducing thirst including ingesting the carbonated jelly drink.

## Description

### TECHNICAL FIELD

The present invention relates to a carbonated jelly drink.

### BACKGROUND ART

Since a urine volume of a renal failure patient decreases due to a decreased kidney function, if drinking too much water, symptoms caused by overhydration, such as swelling, weight gain, difficulty breathing, and increased blood pressure, appear, and causes high blood pressure, heart failure, pulmonary edema, and the like. On the other hand, if taking in too much salt, the salt stays in a body, making the patient thirsty and craving water (Non Patent Literature 1).

In a heart failure patient, poor adherence, such as no restriction to water, is mentioned as an aggravating factor for heart failure. Further, it is necessary to restrict the water when dilutional hyponatremia occurs due to severe heart failure (Non Patent Literature 2).

For a hepatic cirrhosis patient who needs to be careful about ascites, ascites can cause abdominal pain, shallow breathing, and difficulty in eating. The basic measures against ascites are dietary therapy and administration of diuretics. In the dietary therapy, salt restriction (2 g to 5 g/day) and water restriction (1 L/day or less) are required (Non Patent Literature 3).

For a patient with hyponatremia defined as a serum sodium (Na) level of less than 135 mEq/L, that is, having a disease state in which an amount of water is relatively larger than an amount of Na in the blood, it is also necessary to restrict the water. For example, to treat hyponatremia due to vasopressin hypersecretion, in addition to treating an underlying disease, a total daily water ingestion amount is restricted to 15 mL to 20 mL per kg of body weight (Non Patent Literature 4).

In addition, 10% to 20% of inpatients in psychiatric hospitals suffer from pollakidipsia, and 3% to 4% thereof exhibit water intoxication, resulting in hyponatremia due to excessive water intake (Non Patent Literature 5).

While there are patients who need to restrict water intake as described above, a method of adjusting a water amount is limited, such as putting a daily target water amount into a water bottle or a plastic bottle in advance, putting water or the like into a plastic bottle, freezing it, and drinking it little by little as it melts, changing to a cup or a teacup that is one size smaller than the one used before, gargling instead of drinking water, licking ice, brushing teeth and freshening mouth.

By the way, one example of a reason for thirst is an increase in osmotic pressure of the body. Although it is not possible to immediately decrease the osmotic pressure only by drinking a small amount of water, thirst is quenched by a mechanism called the "oropharyngeal reflex", which stops thirst when water passes through the throat. It has been found that when water passes through the throat and stimulates the oropharynx, a thirst feel and a vasopressin secretion response in the brain converge (Non Patent Literature 6).

### CITATION LIST

### NON-PATENT LITERATURE

[Non Patent Literature 1] Japan Association of Kidney Disease Patients, [online], "About kidney disease", "About water and salt intake", searched on June 15, 2022, Internet<URL:https://www.zjk.or.jp/kidney-disease/water-salt-intake/>
[Non Patent Literature 2] The Japanese Circulation Society/Japanese Heart Failure Society Joint Guidelines, "Acute/Chronic Heart Failure Clinical Practice Guidelines (2017 revised edition)" published on March 23, 2018
[Non Patent Literature 3] Hirohito Tsubouchi, "1. Treatment of liver cirrhosis" The Journal of the Japanese Society of Internal Medicine, 2010, Vol. 99, No. 9, page 2223.
[Non Patent Literature 4] Shintaro Iwama et al., "I. Hyponatremia and endocrine diseases" The Journal of the Japanese Society of Internal Medicine, 2020, Vol. 109, No. 4, page 705
[Non Patent Literature 5] Psychiatry Course Supervisors Meeting, Mitsumoto Sato, Shinichi Niwa, Shinpei Inoue, "Schizophrenia Treatment Guidelines 2nd Edition", IGAKU-SHOIN, 2008, page 133
[Non Patent Literature 6] Christopher A. Zimmerman et al., "A gut-to-brain signal of fluid osmolarity controls thirst satiation", Nature, April 4, 2019, Vol 568, 98-102

### SUMMARY OF INVENTION

### TECHNICAL PROBLEM

As described above, there is a need for ways to reduce an amount of water intake. Therefore, an object of the invention is to provide a drink for reducing an amount of water intake.

### SOLUTION TO PROBLEM

As a result of intensive studies, the present inventors have found that an amount of water intake can be reduced by ingestion of a carbonated jelly drink, thereby completing the invention.

That is, the invention is as follows.
[1] A carbonated jelly drink for reducing an amount of water intake.
[2] The carbonated jelly drink according to [1], which is used for preventing overhydration.
[3] The carbonated jelly drink according to [2], which is used for a subject selected from the group consisting of a renal failure patient, a heart failure patient, a hepatic cirrhosis patient, and a hyponatremia patient.
[4] The carbonated jelly drink according to [2] or [3], in which a label indicating suitability for deterioration-prevention and recovery of an overhydration state is attached.
[5] The carbonated jelly drink according to [1], which is used for preventing frequent urination.
[6] The carbonated jelly drink according to [1], which is used for preventing obesity and has 10 kcal/100 ml or more calories.
[7] A carbonated jelly drink for reducing thirst.
[8] The carbonated jelly drink according to any one of [1] to [7], in which gas pressure is 0.02 MPa to 0.5 MPa.
[9] The carbonated jelly drink according to any one of [1] to [8], in which a hardness is 500 N/m² to 20000 N/m².
[10] A powder formulation for producing the carbonated jelly drink according to any one of [1] to [9].
[11] A method for reducing an amount of water intake, comprising ingesting a carbonated jelly drink.
[12] A method for reducing thirst, comprising ingesting a carbonated jelly drink.

In addition, the following may be mentioned as one aspect of the invention.
·A drink for reducing an amount of water intake including carbonated jelly.
·Use of a carbonated jelly for the manufacture of a drink for reducing an amount of water intake.
·A carbonated jelly drink for use in reducing the amount of water intake.
·A drink for reducing thirst including carbonated jelly.
·Use of a carbonated jelly for the manufacture of a drink for reducing thirst.
·A carbonated jelly drink for use in reducing thirst.
·A drink for preventing overhydration including carbonated jelly.
·Use of carbonated jelly for the manufacture of a drink for preventing overhydration.
·A carbonated jelly drink for use as a drink for preventing overhydration.
·A method for preventing overhydration including ingesting a carbonated jelly drink.
·Use of a powder formulation for the manufacture of a carbonated jelly drink for reducing an amount of water intake.
·Use of a powder formulation for the manufacture of a carbonated jelly drink for reducing thirst.
·Use of a powder formulation for the manufacture of an overhydration prevention carbonated jelly drink.

### ADVANTAGEOUS EFFECTS OF INVENTION

According to the ingestion of the carbonated jelly drink of the present embodiment, thirst can be reduced, and the amount of water intake can be reduced.

### BRIEF DESCRIPTION OF DRAWINGS

[FIG. 1] FIG. 1 shows an amount of water intake of a carbonated jelly drink, a jelly drink, a carbonated drink, and a drink (no carbonic acid and no jelly). A vertical axis represents the amount of water intake (g).
[FIG. 2A] FIG. 2A shows an average value ± standard deviation (n = 4) with a ratio (%) of each of [2: slightly weaker] and [1: quite weak] when a carbonation sensation [3: equivalent] is 100% with respect to an average amount of water intake classified by each carbonation sensation of the carbonated drink.
[FIG. 2B] FIG. 2B shows an average value ± standard deviation (n = 4) with a ratio (%) of each of [2: slightly weaker] and [1: quite weak] when a carbonation sensation [3: equivalent] is 100% with respect to an average amount of water intake classified by each carbonation sensation of the carbonated jelly drink.
[FIG. 3] FIG. 3 shows a correlation between an elapsed time after opening (horizontal axis) and gas pressure (Mpa) (vertical axis) of the carbonated jelly drink and carbonated drink.

### DESCRIPTION OF EMBODIMENTS

Hereinafter, an embodiment according to the invention will be described in detail, which is an example of preferred embodiments, and the invention is not limited to contents thereof.

The term "to" in a numerical range indicates a range including numerical values before and after the numerical range, and for example, "0 to 100" means a range of 0 or more and 100 or less.

### 1. Carbonated Jelly Drink

One aspect of the invention is a carbonated jelly drink for reducing an amount of water intake. One aspect of the invention is a carbonated jelly drink for reducing thirst.

The term "carbonated jelly drink" means a jelly drink containing carbon dioxide gas. The jelly may be solid or fluid, and includes, for example, a sol, a gel, or a mixture thereof.

The jelly drink is jelly that can be drunk. When the jelly drink is provided in a form of being filled into a container, that is, a packaged drink, the jelly drink can be ingested after gently shaking the container to crush the jelly. When the jelly drink is filled into a pouch container with a spout, the jelly drink can be taken out from the container and ingested by compressing a container main body or suctioning a spout part.

Containing carbon dioxide gas in the jelly drink means that the carbon dioxide gas is dissolved or absorbed in a jelly part and/or a syneresis part of the jelly drink. In the carbonated jelly drink according to the present embodiment, a part of the carbon dioxide gas may be present in the jelly drink in a gaseous state.

Due to the ingestion of the carbonated jelly drink according to the present embodiment, thirst can be reduced and the amount of water intake can be reduced. More specifically, due to the ingestion of the carbonated jelly drink according to the present embodiment, the amount of water intake per ingestion can be reduced, and/or a total amount of water intake during a period when the drink is intermittently ingested can be reduced. A reason thereof is presumed to be related to a decrease in ingestion amount per drink compared to that of a normal drink because it is a carbonated jelly drink or occurrence of an irritation in the oral cavity due to squeezing movements. In addition, it is presumed to be related to an influence on triggering swallowing reflex in the pharynx by being a carbonated jelly drink. Therefore, it is presumed that even a small amount of drink can increase a frequency of the oropharyngeal reflex and reduce thirst, thereby reducing the amount of water intake.

For example, when an amount of water intake per ingestion of a drink containing neither carbon dioxide gas nor jelly is 100%, an amount of water intake per ingestion of the carbonated jelly drink according to the present embodiment can be reduced to 25% or less, 30% or less, 35% or less, 40% or less, 45% or less, 50% or less, 55% or less, 60% or less, 70% or less, or 75% or less.

Further, for example, when a total amount of water intake in a case of a drink containing neither carbon dioxide gas nor jelly is intermittently ingested for 1 to 3 days is 100%, a total amount of water intake when intermittently ingesting the carbonated jelly drink according to the present embodiment in the period can be reduced to 25% or less, 30% or less, 35% or less, 40% or less, 45% or less, 50% or less, 55% or less, 60% or less, 65% or less, 70% or less, or 75% or less.

An ingestion amount of the carbonated jelly drink according to the present embodiment is preferably 0.5 g to 40 g, more preferably 2 g to 10 g per kg of body weight per day.

Regarding the ingestion amount of the carbonated jelly drink according to the present embodiment, the carbonated jelly drink of the amount described above can be ingested in one dose a day or in multiple divided doses a day. When the ingestion is performed in multiple divided doses, the number of ingestion is not particularly limited and can be 1 dose to 100 doses/day, 2 doses to 50 doses/day, 5 doses to 10 doses/day, or the like. In addition, when the ingestion is performed in multiple divided doses, a time between each ingestion is not particularly limited and can be 15 minutes, 1 hour, 4 hours, or the like.

Since the carbonated jelly drink according to the present embodiment can reduce the amount of water intake, the carbonated jelly drink can be used for preventing overhydration. The term overhydration means that there is excess water in the body. The term prevention means prevent the disease state (disease) before establishment.

Since the carbonated jelly drink according to the present embodiment can reduce the amount of water intake, the carbonated jelly drink can be used for prevent frequent urination.

Since the carbonated jelly drink according to the present embodiment can reduce the amount of water intake, the carbonated jelly drink according to the present embodiment can prevent obesity when having high calorie. For example, the carbonated jelly drink according to the present embodiment may be 10 kcal/100 ml or more, and preferably 40 kcal/100 ml or more.

When the carbonated jelly drink according to the present embodiment is used for preventing overhydration, the carbonated jelly drink can be used for, for example, a renal failure patient, a heart failure patient, a hepatic cirrhosis patient, a hyponatremia patient, and the like as a subject. Examples of the renal failure patient include a renal failure patient who needs dialysis. Examples of the heart failure patient include a heart failure patient with hyponatremia. Examples of the hepatic cirrhosis patient include a hepatic cirrhosis patient who needs to be careful about ascites. Examples of the hyponatremia patient include a mental disease patient who is a compulsive drinker and whose water ingestion amount is excessive, a patient with antidiuretic hormone incompatibility syndrome, a patient taking antipsychotics, diuretics, or antidepressants, a patients with water intoxication caused by water ingestion during exercise, and the like.

To the carbonated jelly drink according to the present embodiment, a label indicating suitability for deterioration-prevention and recovery of the overhydration state and usage in the dietary therapy for a patient whose water ingestion is restricted may be attached.

The hardness of the carbonated jelly drink according to the present embodiment is preferably from 500 N/m² to 20000 N/m², and more preferably from 1000 N/m² to 10000 N/m² from a viewpoint of release properties from the container and ease of crumbling due to vibration.

The hardness of the jelly can be measured by using a rheometer. Specifically, the hardness of the jelly is a measurement value measured by filling a petri dish having a diameter of 40 mm and a height of 15 mm with the jelly and under conditions of a cylindrical plunger having a diameter of 20 mm, a compression rate of 10 mm/sec, a clearance of 5 mm, and a temperature of 20°C. The hardness of the jelly is measured by taking out the jelly from the container without disintegrating the jelly, by, for example, breaking only the container.

A gelling agent used in the carbonated jelly drink according to the present embodiment is not particularly limited as long as having properties as a general gelling agent. In the present specification, examples of the gelling agent include a gelatin, a carrageenan (kappa, iota, AND lambda), an ionone carrageenan, an agar, a locust bean gum, a xanthan gum, a gellan gum, a pectin, a guar gum, a sodium alginate, a potassium alginate, a galactomannan, a glucomannan, a psyllium seed gum, a gum arabic, a karaya gum, an alginate, an alginate ester, a pullulan, a curdlan, a gum tragacanth, a gatti gum, an arabinogalactan, a cellulose, a starch, a processed starch, a dextrin, a carboxymethylcellulose (calcium and sodium), a soybean watersoluble polysaccharide, a flaxseed gum, a tara gum, a gum tragacanth, a tamarind seed gum, and the like. These gelling agents may be used alone or may be used in combination of two or more.

From a viewpoint of reducing the amount of water intake, the gas pressure of the carbonated jelly drink according to the present embodiment is preferably 0.02 MPa to 0.5 MPa, and more preferably 0.03 MPa to 0.4 MPa.

In the present specification, the gas pressure refers to the internal gas pressure in the packaged drink at one atmosphere and 20°C. In a case of an unopened container such as a plastic bottle or a can, the measurement can be performed by attaching an internal gas pressure gauge to the container, opening a stopcock to perform a degassing (sniff) operation, immediately closing the stopcock and then vigorously shaking the container, and converting the pressure to MPa at 20°C by using a carbon dioxide gas absorption coefficient table after the pressure becomes constant.

The carbonated jelly drink according to the present embodiment may contain a foaming agent to impart air bubbles. Here, the foaming agent may contain ice having a maximum length of 5 mm or more and a CO₂ content of 3% by weight or more (for example, WO2019/124438).

The carbonated jelly drink according to the present embodiment may contain a fragrance for increasing a carbonation sensation and cooling sensation and/or freshness sensation at the oral cavity or pharynx. For example, citral, cineole, spilanthol, and the like are components capable of enhancing the carbonation sensation by being contained in the carbonated jelly drink (for example, JP2021-101649A, JP2021-151259A, and JP2006-166870A).

The citral is a compound represented by a molecular formula C₁₀H₁₆O, and is aromatic component contained in essential oil obtained from peels of citrus fruits such as lemons, limes, oranges, and grapefruits or leaves of a lemongrass or a plant of the same type. The citral is present as a compound of geranial and neral (stereoisomorph), and a ratio thereof is not particularly limited. The cineole is a compound represented by a molecular formula C₁₀H₁₅O, and is one type of monoterpenoids contained in, for example, an eucalyptus oil, a kayaputte oil, a rosemary oil, or a laurel oil. In the citral, there are two isomers of 1,4-cineole and 1,8-cineole, and a ratio thereof is not particularly limited. The spilanthol is a pungent component contained in Spilanthes acmella or Spilanthes acmella var. oleracea.

In the carbonated jelly drink according to the present embodiment, the concentrations of citral, cineole, and spilanthol can be quantitatively determined by a solid-phase microextraction (SPME) method using a gas ghromatography-mass spectrometry (GC/MS).

In the carbonated jelly drink according to the present embodiment, to enhance the cooling sensation and/or the freshness sensation, compositions disclosed in, for example, JP2014-209868A, JP2011-520925A, JP6374547B, and JP7078550B may be used.

To adjust a pH, a pH adjustment agent or an acidulant may be added to the carbonated jelly drink according to the present embodiment. It is sufficient that the pH adjustment agent or the acidulant can enable the pH adjustment, and examples thereof include citric acid, sodium citrate, gluconic acid, sodium gluconate, potassium gluconate, succinic acid, sodium succinate, acetic acid, sodium acetate, DL-tartaric acid, DL-sodium tartrate, lactic acid, sodium lactate, glacial acetic acid, fumaric acid, sodium fumarate, malic acid, sodium malate, phosphoric acid, and the like.

In addition to the above, the carbonated jelly drink according to the present embodiment may contain saccharides (glucose, sugar, and the like) and/or additives that are acceptable for food hygiene. Examples of the additive that is acceptable for food hygiene include sweeteners, bittering agents, coloring agents, preservatives, thickening stabilizers, antioxidants, coloring agents, bleaching agents, preservatives, fragrances, and the like.

The carbonated jelly drink according to the present embodiment may be provided in a form of being filled into the container, that is, a packaged drink. In this case, the container to be used is not particularly limited, and examples thereof include bottles, cans, and plastic bottles, as long as being easy to fill and drink. A wide-mouth container and a container with a spout are easy to drink, and a bottle including a screw cap is convenient because it is possible to reuse the bottle can after opening.

### 2. Method for Producing Carbonated Jelly Drink

The carbonated jelly drink according to the present embodiment is not particularly limited as long as the carbonated jelly drink satisfies the above-described desired characteristics, and for example, is produced by the following method.

The carbonated jelly drink according to the present embodiment can be produced by using a powder formulation to be described later.

The carbonated jelly drink according to the present embodiment may be produced by mixing the jelly with commercially available carbonated drinks.

The carbonated jelly drink according to the present embodiment can be produced by a known method in which, for example, a cool-water-insoluble gelling agent is uniformly dispersed in an aqueous solution, a carbon dioxide gas is sealed therein, the container is filled and sealed, and the container is cooled after being heated and sterilized. The carbonated jelly drink according to the present embodiment can also be produced by a known method for producing a carbonated jelly drink (JPH4-252156A, JP2009-112236A, JP2009-261359A, JP2011-211964A, and the like), and a known method for improving the carbonation sensation (WO2019/124438, JP2020-72762A, and the like).

### 3. Powder Formulation

The present embodiment includes a powder formulation for producing the carbonated jelly drink according to the present embodiment. By mixing a drink and the powder formulation according to the present embodiment, the carbonated jelly drink according to the present embodiment can be produced.

Examples of the drink include a carbonated drink, a jelly drink, a drink containing no carbonic acid and jelly, and the like.

The powder formulation to be mixed with the carbonated drink contains (A) a gelling agent in the powder formulation. Examples of the gelling agent include the above-mentioned gelling agent, and preferably, a gelatin, a carrageenan (kappa, iota, lambda), an agar, a locust bean gum, a xanthan gum, a gellan gum, and a pectin, and more preferably, an agar. A plurality of these examples may be used in combination. When the (A) gelling agent is difficult to dissolve in water at room temperature, the powder formulation containing the (A) gelling agent may be mixed with a drink (for example, drinking water) and heated and dissolved, and then mixed with the carbonated drink. In addition, the powder formulation containing the (A) gelling agent may be mixed with a carbonated drink in a sealed container, heated and dissolved, and then cooled as necessary.

The powder formulation to be mixed with the jelly drink preferably contains (B) at least one of carbonate and hydrogen carbonate and (C) at least one of acid and salt that liberate carbonic acid in the powder formulation.

As the (B) at least one of carbonate and hydrogen carbonate, anything is acceptable as long as being acceptable for food hygiene, and examples thereof include calcium carbonate, sodium carbonate, magnesium carbonate, potassium carbonate, ammonium carbonate, ammonium hydrogen carbonate, and sodium hydrogen carbonate, and preferably, sodium hydrogen carbonate. A plurality of these examples may be used in combination. As the (B) at least one of carbonate and hydrogen carbonate, for example, a foaming agent or a product having a foaming property (food, food additive, and pharmaceutical product) may be used.

As the (C) at least one of acid and salt that liberate carbonic acid, anything is acceptable as long as being acceptable for food hygiene, for example, L-ascorbic acid, ammonium chloride, gluconolactone, L-tartaric acid, calcium dihydrogen pyrophosphate, disodium dihydrogen pyrophosphate, fumaric acid, monosodium fumarate, sodium metaphosphate, aluminum ammonium sulfate, potassium aluminum sulfate, DL-malic acid, potassium dihydrogen phosphate, calcium dihydrogen phosphate, sodium dihydrogen phosphate, and citric acid are mentioned, and preferably, citric acid is mentioned. A plurality of these examples may be used in combination.

When the powder formulation is added to a jelly drink using a gelling agent having a high gel melting temperature (for example, carrageenan (kappa and iota), agar, locust bean gum, xanthan gum, gellan gum, and pectin), heating may be performed at 50°C or higher to generate carbon dioxide more quickly. Cooling may be performed after heating as necessary.

The powder formulation to be mixed with the drink containing no carbonic acid and jelly preferably contains the (A) gelling agent, the (B) at least one of carbonate and hydrogen carbonate, and the (C) at least one of acid and salt that liberate carbonic acid in the powder formulation. At this time, when the (A) gelling agent is difficult to be dissolved in water at normal temperature, the (A) single gelling agent, a mixture obtained by mixing the (A) gelling agent and the (B) at least one of carbonate and hydrogen carbonate or a mixture obtained by mixing the (A) gelling agent and the (C) at least one of acid and salt that liberate carbonic acid may be a first formulation, and the rest may be a second formulation. In this case, the first formulation containing the (A) gelling agent is mixed with the drink containing no carbonic acid and jelly (for example, drinking water), heated and dissolved, and then the second formulation is added. The second formulation may be added by being dissolved in the drink containing no carbonic acid and jelly (for example, drinking water). Alternatively, the powder formulation containing the (A) gelling agent, the (B) at least one of carbonate and hydrogen carbonate, and the (C) at least one of acid and salt that liberate carbonic acid may be mixed with the drink containing no carbonic acid and jelly in a sealed container, heated and dissolved, and then cooled as necessary.

A ratio by mass of the (A) gelling agent to the (B) at least one of carbonate and hydrogen carbonate may be in any range capable of producing the carbonated jelly drink according to the present embodiment, preferably 1: 0.1 to 50, and more preferably 1: 1 to 20.

The ratio by mass of the (A) gelling agent to the (C) at least one of acid and salt that liberate carbonic acid may be in any range capable of producing the carbonated jelly drink according to the present embodiment, preferably 1: 0.1 to 50, and more preferably 1: 1 to 20.

A ratio by mass of the (B) at least one of carbonate and hydrogen carbonate to the (C) at least one of acid and salt that liberate carbonic acid may be in any range capable of producing the carbonated jelly drink according to the present embodiment, preferably 1: 0.01 to 10, and more preferably 1: 0.1 to 5.

A ratio by mass of the powder formulation according to the present embodiment to the drink may be in any range capable of producing the carbonated jelly drink according to the present embodiment, and is for example, 1: 10 to 50. A mass of the powder formulation of the ratio by mass is a total mass of the (A) gelling agent, the (B) at least one of carbonate and hydrogen carbonate, and the (C) at least one of acid and salt that liberate carbonic acid, and does not include a pH adjustment agent, an acidulant, a saccharide, and an additive to be described later.

When the jelly drink or the drink containing no carbonic acid and jelly contains in advance acids or salts that liberate carbonic acid, the powder formulation according to the present embodiment may be in a form of containing the (B) at least one of carbonate and hydrogen carbonate and not containing the (C) at least one of acid and salt that liberate carbonic acid. When the jelly drink or the drink containing no carbonic acid and jelly contains in advance carbonate or hydrogen carbonate, the powder formulation according to the present embodiment may be in a form of containing the (C) at least one of acid and salt that liberate carbonic acid and not containing the (B) at least one of carbonate and hydrogen carbonate.

The powder formulation according to the present embodiment may contain the pH adjustment agent, the acidulant, the saccharide, the additive, and the like.

By using the powder formulation according to the present embodiment, it is possible to easily prepare the carbonated jelly drink according to the present embodiment at an outing destination by adding the carried powder formulation to a jelly drink without a device for sealing the carbon dioxide gas and without being limited by time and location. At this time, a carbonated jelly drink that is not commercially available can also be prepared by using a desired drink or jelly. In a vending machine, by providing two spouts for the jelly drink and the powder formulation, or three spouts for the jelly, the drink, and the powder formulation, a carbonated jelly drink can be prepared by freely selecting and combining a favorite jelly drink and carbonation strength, or a favorite jelly, drinking water, and carbonation strength. The prepared carbonated jelly drink can be taken home or carried around for drinking whenever necessary by bringing a vacuum-insulated carbonated drink water bottle, a recycled glass bottle with a lid, or a plastic bottle container.

### 4. Method of Using Carbonated Jelly Drink

In one embodiment according to the invention, a method for reducing the amount of water intake of ingesting the carbonated jelly drink is mentioned. In addition, in one embodiment according to the invention, a method for reducing thirst of ingesting the carbonated jelly drink is mentioned.

Examples of a subject for the method for reducing the amount of water intake and the method for reducing thirst include a renal failure patient, a heart failure patient, a hepatic cirrhosis patient, a hyponatremia patient, and the like. Examples of the renal failure patient include a renal failure patient who needs dialysis. Examples of the heart failure patient include a heart failure patient with hyponatremia. Examples of the hepatic cirrhosis patient include a hepatic cirrhosis patient who needs to be careful about ascites. Examples of the hyponatremia patient include a mental disease patient who is a compulsive drinker and whose water ingestion amount is excessive, a patient with antidiuretic hormone incompatibility syndrome, a patient taking antipsychotics, diuretics, or antidepressants, a patients with water intoxication caused by water ingestion during exercise, and the like.

The ingestion amount of the carbonated jelly drink in the method for reducing the amount of water intake and the method for reducing thirst is, as described above, preferably 0.5 g to 40 g, more preferably 2 g to 10 g per kg of body weight per day.

As the method for reducing the amount of water intake or the method for reducing thirst, the carbonated jelly drink can be ingested in one dose a day or in multiple divided doses a day. When the ingestion is performed in multiple divided doses, the number of ingestion is not particularly limited and can be 1 dose to 100 doses/day, 2 doses to 50 doses/day, 5 doses to 10 doses/day, or the like. In addition, when the ingestion is performed in multiple divided doses, a time between each ingestion is not particularly limited and can be 15 minutes, 1 hour, 4 hours, or the like.

### [Examples]

The invention will be described below with reference to specific examples, but the invention is not limited to the examples in any way.

### (Test Participants)

The test was conducted on two pair of healthy male and female adults between ages of 30 and 50 with no abnormal changes in physical condition.

### (Test Drink)

As a test drink, a "carbonated jelly drink" (MATCH Jelly Mineral Lychee: produced by Otsuka Foods Co., Ltd.) (components: saccharides (high-fructose corn syrup and sugar), grapefruit juice concentrate, salt, lychee juice concentrate/carbonic acid, acidulant, gelling agent (polysaccharide thickener), calcium lactate, vitamin C, potassium chloride, fragrance, monosodium glutamate, sweetener (acesulfame potassium and sucralose), magnesium chloride, niacinamide, vitamin B6, and safflower pigment) and a "carbonated drink" (MATCH Mineral Lychee, produced by Otsuka Foods Co., Ltd.) (components: saccharides (high-fructose corn syrup and sugar), grapefruit juice concentrate, lychee juice concentrate, salt/carbonic acid, acidulant, vitamin C, potassium citrate, potassium chloride, sweetener (acesulfame potassium, stevia, and sucralose), fragrance, calcium lactate, caffeine, monosodium glutamate, magnesium chloride, niacinamide, vitamin B6, and safflower pigment) were used. In addition, a "jelly drink" that is decarboxylated by leaving the carbonated jelly drink open at room temperature (around 20°C) for 10 hours or more and a "drink (no carbonic acid and no jelly)" that is decarboxylated by leaving the carbonated drink open at room temperature (around 20°C) for 10 hours or more were prepared. The gas pressure when opening the carbonated jelly drink and the carbonated drink was 0.21 MPa and 0.15 MPa, respectively, and was confirmed to be 0 MPa 8 hours after opening and that either drink was completely decarboxylated. To eliminate an influence on test results due to a difference in flavor, the test drink was unified to lychee flavor.

The presence or absence of the carbon dioxide gas and the jelly contained in each of the carbonated jelly drink, the carbonated drink, the jelly drink, and the drink (no carbonic acid and no jelly) is as shown in Table 1.

### [Table 1]

**Table 1**

| | Carbon dioxide gas | Jelly |
|---|---|---|
| Carbonated jelly drink | Presence | Presence |
| Carbonated drink | Presence | Absence |
| Jelly drink | Absence | Presence |
| Drink (no carbonic acid and no jelly) | Absence | Absence |

### [Example 1. Comparison of Amount of Water Intake when Drinking Each Test Drink Voluntarily]

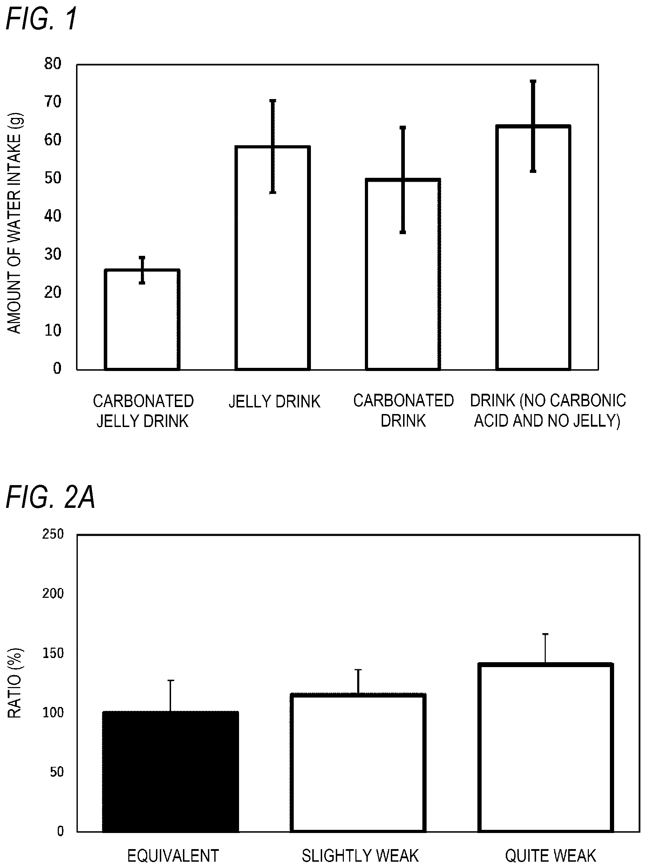

A plastic bottle container of each test drink of the carbonated jelly drink, the carbonated drink, the jelly drink, and the drink (no carbonic acid and no jelly) was opened after weight measurement, and the test participants were allowed to drink three sips voluntarily. Each of the test drinks before drinking and after drinking three sips was weighed with a balance, and the weight after drinking three sips was subtracted from the weight before drinking to determine the amount of water intake (g). Results of an average amount of water intake (g) expressed as average value ± standard deviation (n = 4) are shown in FIG. 1. The carbonated jelly drink and the jelly drink were subjected to drinking and measurement after being shaken three times before the containers were opened, and the carbonated drink and the drink (no carbonic acid and no jelly) were drunk and measured directly.

Results are shown in FIG. 1. Data was expressed as an average value ± standard deviation. As for statistical processing, a difference between groups were detected by using Tukey multiple comparisons by one-way analysis of variance, and a significance level was set at 5%. As a result, as shown in FIG. 1, the group drinking the carbonated jelly drink showed a significantly lower value than the other groups. On the other hand, there was no significant difference in the three groups drinking other than the carbonated jelly drink (Tukey multiple comparisons).

That is, it was shown that the amount of water intake can be naturally reduced by drinking the carbonated jelly drink.

### [Example 2. Correlation between Carbonation Sensation and Reduction of Amount of Water Intake]

To confirm a correlation between the carbonation sensation and the reduction of the amount of water intake, the test was performed as follows.

The plastic bottle containers of the carbonated jelly drink and the carbonated drink were opened after the weight measurement. An average value of a content in each of the containers of the carbonated jelly drink and the carbonated drink before drinking was 260 g and 500 mL. The test participants drink three sips voluntarily, immediately put the lid, and measured the weight again. Further, sensory evaluation on the carbonation sensation of the test drink was performed. In any of the test drinks, the present operation was repeated every hour until there was no drink in the container.

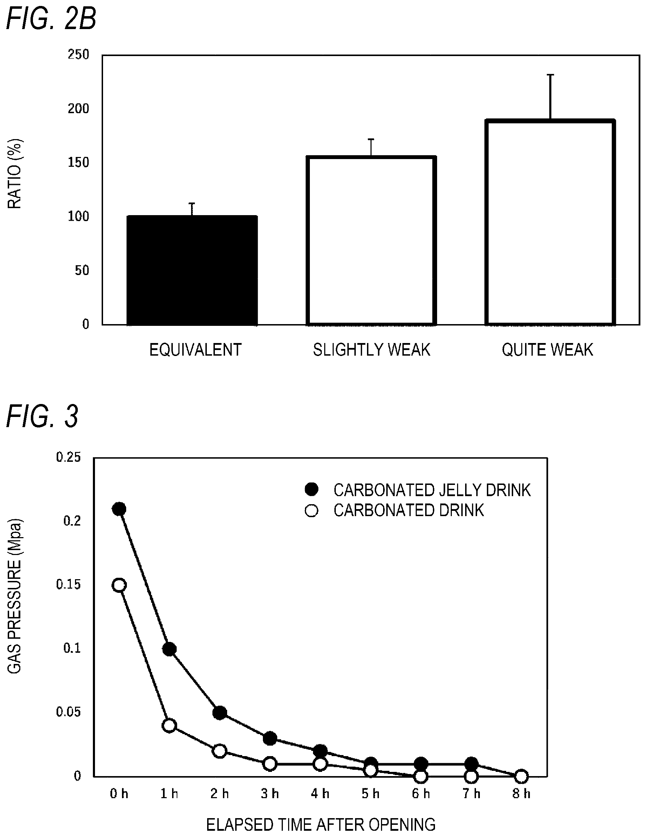

Each of the test drinks before drinking and after drinking three sips was weighed with a balance, and the weight after drinking three sips was subtracted from the weight before drinking to determine the amount of water intake (g). The carbonation sensation was evaluated by four classifications including 3: equivalent, 2: slightly weak, 1: quite weak, and 0: not felt as compared with immediately after the opening. Based on the evaluation, the test drinks were classified with each carbonation sensation evaluated at the time of ingestion, and an average value of the amount of water intake in each carbonation sensation was determined. The average amount of water intake classified by the carbonation sensation of the carbonated drink is shown in FIG. 2A, and the average amount of water intake classified by the carbonation sensation of the carbonated jelly drink is shown in FIG. 2B. In both of FIGS. 2A and 2B, an average value ± standard deviation (n = 4) was shown with a ratio (%) of each of the carbonation sensation [2: slightly weaker] and [1: quite weak] when the carbonation sensation [3: equivalent] was 100% with respect to the average amount of water intake.

Results are shown in FIG. 2. Data was expressed as an average value ± standard deviation. As for statistical processing, a difference between groups were detected by using Tukey multiple comparisons by one-way analysis of variance, and a significance level was set at 5%.

As shown in FIG. 2A, when the carbonated drink was ingested, there was no significant difference in average amount of water intake in groups classified by the carbonation sensation. On the other hand, as shown in FIG. 2B, when the carbonated jelly drink is ingested, the group having the carbonation sensation [3: equivalent] was significantly lower in average amount of water intake than the carbonation sensation [2: slightly weaker] and the carbonation sensation [1: quite weak] (Tukey multiple comparisons).

That is, when the carbonated jelly drink was ingested, the amount of water intake was reduced when the carbonation sensation was strongly felt.

### [Reference Example. Gas Pressure of Test Drink]

A carbonated jelly drink and a carbonated drink filled in an unopened plastic bottle container were prepared as the test drinks, and the gas pressure of the test drinks was measured. A test drink to be subjected to the gas pressure measurement was prepared separately from Examples 1 and 2 by repeating opening and content liquid collection.

A content of the test drink used for the gas pressure measurement after A hour elapses from the opening was set to (260 - 30 × A) g and (500 - 60 × A) mL, respectively for the carbonated jelly drink and the carbonated drink. That is, 30 g and 60 mL were collected from each test drink every 1 hour until a predetermined time elapses, and then subjected to the measurement. The collection amount was set with reference to an amount of water intake by three sips (observation results before the present test) of the carbonated jelly drink and the carbonated removal drink immediately after the opening. The carbonated jelly drink was subjected to the measurement after being shaken three times before the opening, and the carbonated drink was measured directly.

Results are shown in FIG. 3. As shown in FIG. 3, the gas pressure at the time of opening the carbonated drink and the carbonated jelly drink was 0.21 MPa and 0.15 MPa, respectively. The gas pressure of the carbonated drink became 0 MPa after 6 hours of opening, and the gas pressure of the carbonated jelly drink became 0 MPa after 8 hours.

### [Example 3. Powder Formulation]

The powder formulation according to the present embodiment was produced by using the following (A) to (C).
(A) Gelling agent
   0.8 g agar
(B) Hydrogen Carbonate
   4.6 g Sodium Hydrogen Carbonate
(C) Acid that liberates carbonic acid
   3.5 g Citric Acid

In the powder formulation, the (A) gelling agent was used as the first formulation, and the (B) hydrogen carbonate and the (C) acid that liberates carbonic acid were mixed and used as the second formulation.

The first formulation (0.8 g) was mixed with water (101 g), followed by being heated and dissolved and then transferred to a sealed container and cooled. The second formulation (8.1 g) and drinking water (110 g) were added thereto and mixed to prepare the carbonated jelly drink.

### INDUSTRIAL APPLICABILITY

The carbonated jelly drink according to the invention can reduce thirst and can reduce an amount of water intake by ingestion.

Although the invention has been described in detail with reference to specific aspects, it is obvious to those skilled in the art that various changes and modifications can be made without departing from the spirit and scope of the invention. The present application is based on Japan patent application (Patent Application No. 2022-132054) filed on Aug. 22, 2022, which is incorporated by reference in its entirety. In addition, all references cited here are incorporated herein in its entirety.

## Claims

1. A carbonated jelly drink for reducing an amount of water intake.

2. The carbonated jelly drink according to claim 1, which is used for preventing overhydration.

3. The carbonated jelly drink according to claim 2, which is used for a subject selected from the group consisting of a renal failure patient, a heart failure patient, a hepatic cirrhosis patient, and a hyponatremia patient.

4. The carbonated jelly drink according to claim 2 or 3, wherein a label indicating suitability for deterioration-prevention and recovery of an overhydration state is attached.

5. The carbonated jelly drink according to claim 1, which is used for preventing frequent urination.

6. The carbonated jelly drink according to claim 1, which is used for preventing obesity and has 10 kcal/100 ml or more calories.

7. A carbonated jelly drink for reducing thirst.

8. The carbonated jelly drink according to any one of claims 1 to 7, wherein gas pressure is 0.02 MPa to 0.5 MPa.

9. The carbonated jelly drink according to any one of claims 1 to 8, wherein a hardness is 500 N/m² to 20000 N/m².

10. A powder formulation for producing the carbonated jelly drink according to any one of claims 1 to 9.

11. A method for reducing an amount of water intake, comprising: ingesting a carbonated jelly drink.

12. A method for reducing thirst, comprising: ingesting a carbonated jelly drink.
